# EUROPEAN PATENT SPECIFICATION

(11) **EP 3 280 028 B1**
(45) Date of publication and mention of the grant of the patent: **23.09.2020**
(21) Application number: 16183043.5
(22) Date of filing: 05.08.2016
(51) Int. Cl.: H02J 9/06, G06F 1/30, H02J 7/00

(54) **UNINTERRUPTIBLE POWER CONTROL METHOD AND ELECTRONIC DEVICE WITH UNINTERRUPTIBLE POWER SUPPLY**
UNTERBRECHUNGSFREIE STROMSTEUERUNGSVERFAHREN UND ELEKTRONISCHE VORRICHTUNG MIT UNTERBRECHUNGSFREIER STROMVERSORGUNG
PROCÉDÉ DE COMMANDE D'ALIMENTATION SANS COUPURE ET DISPOSITIF ÉLECTRONIQUE AVEC SYSTÈME D'ALIMENTATION SANS COUPURE

(43) Date of publication of application: 07.02.2018
(73) Proprietor: Getac Technology Corporation, Taipei City 11568 (TW)
(72) Inventor: YU, Wen-Huan, 11568 Taipei City (TW)
(74) Representative: Viering, Jentschura & Partner mbB Patent- und Rechtsanwälte

(56) References cited:
- EP-A2- 1 715 349
- US-A1- 2011 109 170
- US-A1- 2016 218 555

## Description

### BACKGROUND OF THE INVENTION

### FIELD OF THE INVENTION

The present invention relates to power control technology and, more particularly, to an uninterruptible power control method and an electronic device with uninterruptible power supply.

### DESCRIPTION OF THE PRIOR ART

Due to technological advancement and development, electronic devices are increasingly common and designed to exhibit features, such as lightweight, compact, and portable, so that electronic device users are no longer confined to a fixed place in order to use electronic devices.

However, the portability of portable electronic devices leads to an outcome, that is, a great increase in the chance that they will fall. If a replaceable battery of a portable electronic device in normal use (i.e., in a normal state) accidentally escapes therefrom (for example, when the portable electronic device falls to the ground hard enough to cast the replaceable battery out of the portable electronic device,) the portable electronic device will shut down instantly for loss of power supply. The unexpected shutdown of the portable electronic device ends up with a loss of unsaved data or temporarily saved data which is otherwise held in the portable electronic device. As a result, the portable electronic device malfunctions and thus brings inconvenience to the user. US 2011/109170 A1 relates to a hand-held electronic device and method for preventing fall thereof which are provided with a fall prevention mechanism. US 2016/218555 A1 relates to a mobile device including a primary battery as a power source to power components of the mobile device, and a secondary battery as an additional power source to power the components of the mobile device. EP 1 715 349 A2 relates to a free fall detection device capable of detecting a fall accompanied by rotation.

### SUMMARY OF THE INVENTION

In an embodiment, according to the independent claim 1, an uninterruptible power control method comprises the steps of: reading a detection result from a motion sensor of an electronic device; determining whether the detection result meets a motion condition; and turning on a power supply path of a secondary battery module of the electronic device when the detection result meets the motion condition, wherein a primary battery module supplies power to the electronic device in a normal state, and the secondary battery module is built in the electronic device and is coupled in parallel with the primary battery module at the power input end via a switch module, and the turning on step builds the power supply path of the secondary battery module by turning on the switching module.

In an embodiment, according to the independent claim 8, an electronic device with uninterruptible power supply comprises a power input end, a secondary battery module, a switch module, a motion sensor, and a control unit. The electronic device in a normal state is powered by a primary battery module through the power input end. The switch module is coupled to between the power input end and the secondary battery module, the secondary battery module being coupled in parallel with the primary battery module at the power input end via a switch module, and the turning on step building the power supply path of the secondary battery module by turning on the switching module. The motion sensor senses the motion of the electronic device and yields a detection result accordingly. The control unit determines whether the detection result meets a motion condition. After determining that the detection result meets the motion condition, the control unit generates a start signal to turn on the switch module, thereby turning on a power supply path of the secondary battery module.

In conclusion, according to embodiments of the present invention, an uninterruptible power control method and an electronic device with uninterruptible power supply are characterized in that: upon determination that a detection result from a motion sensor of an electronic device meets a motion condition, a power supply path of a secondary battery module is turned on; hence, even if the electronic device in an unsafe state (for example, falling or being thrown) fails to receive power supplied by a primary battery module, the electronic device will receive power through a power supply circuit of the secondary battery module so that the electronic device will keep functioning and thus avoid suffering a loss of data and getting damaged.

The fine features and advantages of the present invention are illustrated with embodiments and described hereunder to enable persons skilled in the art to understand the technical solution of the present invention and implement it accordingly. Furthermore, persons skilled in the art can easily understand the objectives and advantages of the present invention by making reference to the specification, claims and drawings of the present invention.

### BRIEF DESCRIPTION OF THE DRAWINGS

FIG. 1 is a block diagram of an electronic device with uninterruptible power supply according to an embodiment of the present invention;
FIG. 2 is a block diagram of the electronic device with uninterruptible power supply according to another embodiment of the present invention;
FIG. 3 is a flowchart of an uninterruptible power control method according to an embodiment of the present invention; and
FIG. 4 is a flowchart of the uninterruptible power control method according to another embodiment of the present invention.

### DETAILED DESCRIPTION OF THE EMBODIMENTS

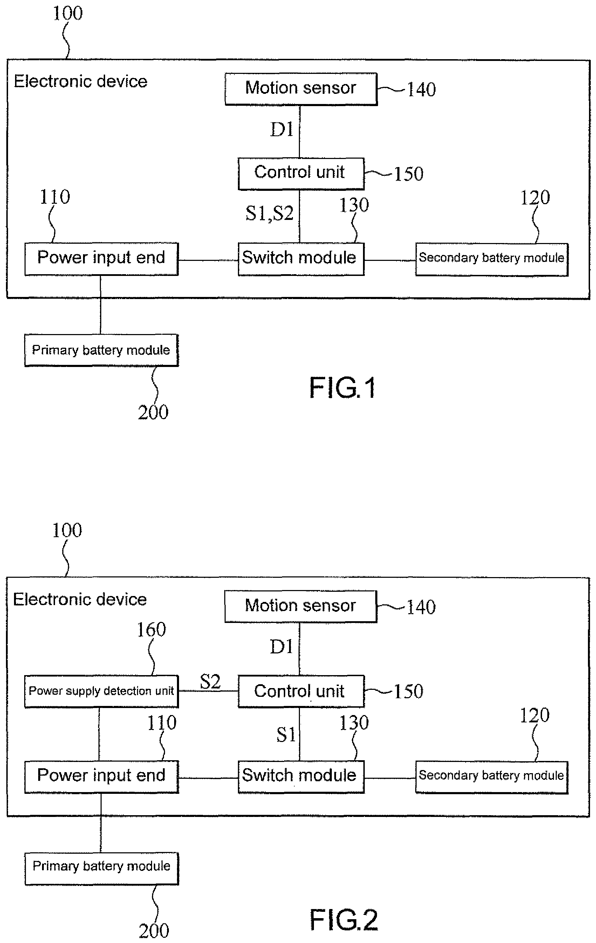

FIG. 1 is a block diagram of an electronic device with uninterruptible power supply according to an embodiment of the present invention. Referring to FIG. 1, an electronic device 100 with uninterruptible power supply comprises a power input end 110, a secondary battery module 120, a switch module 130, a motion sensor 140, and a control unit 150. The control unit 150 is coupled to the switch module 130 and the motion sensor 140. The switch module 130 is coupled to between the secondary battery module 120 and the power input end 110.

In some embodiments, the electronic device 100 is a portable electronic device, such as a notebook computer, a tablet, or a mobile phone, but the present invention is not limited thereto.

The power input end 110 receives a power for maintaining the operation of the electronic device 100. In general, the electronic device 100 in normal use (a normal state) is powered by a primary battery module 200 to maintain its operation. Given the contact between the power input end 110 and its power supply electrode (not shown), the primary battery module 200 has its stored power supplied, through the power input end 110, to the electronic device 100 to maintain the operation of the electronic device 100. To this end, the electronic device 100 has a battery holding portion (not shown), and the primary battery module 200 is separably coupled to the battery holding portion (not shown) of the electronic device 100 to allow a user to change the primary battery module 200 easily.

In some embodiments, the primary battery module 200 is a lithium battery or a rechargeable lithium-ion battery, but the present invention is not limited thereto.

The secondary battery module 120 stores backup power. The secondary battery module 120 is electrically connected to the power input end 110 through the switch module 130 when the switch module 130 is turned on; hence, when the primary battery module 200 fails to power the electronic device 100, the secondary battery module 120 supplies power to the electronic device 100 through the power input end 110, so as to maintain the operation of the electronic device 100. The path which extends from the secondary battery module 120 to the power input end 110 through the switch module 130 is the power supply path of the secondary battery module 120. The power supply path of the secondary battery module 120 is built by turning on the switch module 130 and severed by disconnecting the switch module 130. Therefore, after the power supply path of the secondary battery module 120 has been built, the secondary battery module 120 begins supplying stored power to the electronic device 100. After the power supply path of the secondary battery module 120 has been severed, the secondary battery module 120 stops supplying stored power to the electronic device 100. The secondary battery module 120 is a standalone battery and is built in the electronic device 100, for example, mounted on a circuit board disposed in the electronic device 100.

In general, to prevent the electronic device 100 from being overweight, the secondary battery module 120 built in the electronic device 100 must not be bulky. Hence, the secondary battery module 120 has a lower capacitance than the primary battery module 200. In some embodiments, the secondary battery module 120 is a mercury battery or capacitance module, but the present invention is not limited thereto.

The motion sensor 140 senses the motion of the electronic device 100 and yields detection result D1 accordingly. In some embodiments, the motion sensor 140 is a G-sensor, a gyroscope, or a combination thereof, whereas detection result D1 is gravity information, posture information, or a combination thereof, of the electronic device 100. The gravity information includes gravitational acceleration (i.e., G), motion velocity, and displacement of the electronic device 100, whereas the posture information includes azimuth angle and/or angular velocity of the electronic device 100, but the present invention is not limited thereto.

The control unit 150 reads detection result D1 yielded by the motion sensor 140, compares detection result D1 with a predetermined motion condition, and determines whether detection result D1 meets the motion condition. In some embodiments, the motion condition is that detection result D1 is larger than a corresponding threshold (for example, G is larger than 0.2, and/or angular velocity about any one of X-axis, Y-axis, and Z-axis is larger than 5° per second,) or that detection result D1 falls outside a corresponding range, but the present invention is not limited thereto, as the motion condition can be predetermined by the user as needed.

If the control unit 150 determines that detection result D1 meets the motion condition (for example, detection result D1 is larger than a corresponding threshold,) the control unit 150 will determine that the electronic device 100 is in an unsafe state for the time being, for example, undergoing a speedy, vigorous motion, such as falling or being thrown, and the control unit 150 will generate start signal S1 to turn on the switch module 130, thereby turning on the power supply path of the secondary battery module 120. Hence, even if the primary battery module 200 escapes from the battery holding portion as the electronic device 100 is in an unsafe state (for example, falling or being thrown), the electronic device 100 will be powered by the secondary battery module 120 and keep functioning without shutting down instantly. Conversely, when the control unit 150 determines that detection result D1 does not meet the motion condition, it means that the control unit 150 determines that the electronic device 100 is in a safe state for the time being, and thus the control unit 150 does not generate start signal S1.

The motion sensor 140 senses the electronic device 100 at an interval of one second, and yields detection result D1 accordingly at the end of each instance of sensing. Therefore, the control unit 150 determines, one by one, whether detection results D1 yielded by the motion sensor 140 meet the motion condition. When the control unit 150 generates start signal S1 to turn on the switch module 130 and then determines that the next detection result D1 yielded by the motion sensor 140 does not meet the motion condition, it means that the control unit 150 determines that the electronic device 100 has transited from an unsafe state to a safe state; hence, at this point, the control unit 150 generates shutdown signal S2 to disconnect the switch module 130 and thus sever the power supply path which extends from the secondary battery module 120 to the power input end 110.

In an embodiment, as soon as the control unit 150 determines that the motion condition is not met, the control unit 150 generates shutdown signal S2 to disconnect the switch module 130 and thus sever the power supply path of the secondary battery module 120. In another embodiment, the control unit 150 generates, when a predetermined time period (such as 30 seconds or one minute) has elapsed after determining that the motion condition is not met, shutdown signal S2 to disconnect the switch module 130 and thus sever the power supply path of the secondary battery module 120 such that, if the primary battery module 200 escapes from the electronic device 100 and the user mounts the primary battery module 200 in the battery holding portion of the electronic device 100 within the predetermined time period, the electronic device 100 will not shut down instantly.

In some embodiments, the control unit 150 is an embedded controller (EC), a system-on-a-chip (SoC), a central processing unit (CPU), or a microcontroller (MCU), but the present invention is not limited thereto.

FIG. 2 is a block diagram of the electronic device with uninterruptible power supply according to another embodiment of the present invention. Referring to FIG. 2, the electronic device 100 with uninterruptible power supply further comprises a power supply detection unit 160, whereas the power supply detection unit 160 is coupled to the power input end 110 and the control unit 150.

The power supply detection unit 160 detects whether the power input end 110 receives power supplied by the primary battery module 200 and generates, upon detection that the power input end 110 receives power supplied by the primary battery module 200, shutdown signal S2 to disconnect the switch module 130 and thus sever the power supply path of the secondary battery module 120. Conversely, if the power supply detection unit 160 does not detect that the power input end 110 receives power supplied by the primary battery module 200, the power supply detection unit 160 will not generate shutdown signal S2.

In an embodiment, when a predetermined time period (such as 30 seconds or one minute) has elapsed after the power supply detection unit 160 detects that the power input end 110 receives power supplied by the primary battery module 200, the power supply detection unit 160 generates shutdown signal S2 to disconnect the switch module 130 and thus sever the power supply path of the secondary battery module 120. Hence, if the electronic device 100 meets a motion condition but the primary battery module 200 has not yet escaped from the electronic device 100 (for example, in the situation where the electronic device 100 is falling but has not yet hit the ground,) the power supply path of the secondary battery module 120 will not be severed, and thus the electronic device 100 will not shut down instantly as soon as the primary battery module 200 escapes from the electronic device 100 (for example, in a collision). Therefore, the electronic device 100 will not shut down instantly, provided that the primary battery module 200 of the electronic device 100 continues to supply power after the predetermined time period has elapsed (for example, in the situation where during the predetermined time period the electronic device 100 leaves the unsafe state and the escaped primary battery module 200 is returned to the electronic device 100, or in the situation where during the predetermined time period the electronic device 100 leaves the unsafe state but the battery module 200 does not escape.)

In an embodiment, after generating shutdown signal S2, the power supply detection unit 160 sends shutdown signal S2 to the control unit 150 such that the control unit 150 disconnects the switch module 130 according to shutdown signal S2. Therefore, at this point, the control over the switch module 130 is mainly carried out by the control unit 150, whereas shutdown signal S2 generated from the power supply detection unit 160 triggers the control unit 150 to exercise control over the switch module 130. However, the present invention is not limited thereto.

In another embodiment, shutdown signal S2 generated from the power supply detection unit 160 is directly sent to the switch module 130 to sever the power supply path which extends from the secondary battery module 120 to the power input end 110. Therefore, at this point, the control over the switch module 130 is jointly managed by the control unit 150 and the power supply detection unit 160, whereas the switch module 130 operates according to the received start signal S1 and shutdown signal S2.

In some embodiments, it is only when the control unit 150 generates start signal S1 to turn on the switch module 130 that the power supply detection module 160 begins to perform detection, but the present invention is not limited thereto. In another embodiments, the power supply detection module 160 will not begin to perform detection unless and until the control unit 150 determines that the electronic device 100 meets a motion condition according to a detection result D1 and then the control unit 150 determines that the electronic device 100 does not meet the motion condition according to another detection result D1 .

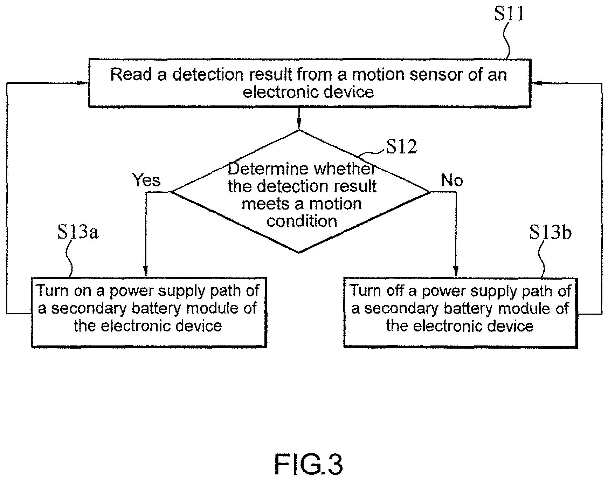

FIG. 3 is a flowchart of an uninterruptible power control method according to an embodiment of the present invention. Referring to FIG. 1 and FIG. 3, in an embodiment, the control unit 150 reads detection result D1 from the motion sensor 140 of the electronic device 100 (step S11). Then, the control unit 150 determines whether detection result D1 meets a motion condition (step S12). If the control unit 150 determines that detection result D1 meets the motion condition, the control unit 150 will turn on a power supply path of the secondary battery module 120 of the electronic device 100 (step S13a). Conversely, if the control unit 150 determines that detection result D1 does not meet the motion condition, the control unit 150 will turn off a power supply path of the secondary battery module 120 of the electronic device 100 (step S13b).

The electronic device 100 in normal use (a normal state) is powered by the primary battery module 200 mounted in its battery holding portion. The secondary battery module 120 is built in the electronic device 100 and parallel-connected to the primary battery module 200 through the switch module 130. The path which extends from the secondary battery module 120 to the power input end 110 through the switch module 130 is the power supply path of the secondary battery module 120.

In an embodiment of step S11, the motion sensor 140 senses the electronic device 100 continuously or at an interval of a predetermined time period and yields detection results D1 accordingly. The control unit 150 reads continuously and consecutively all detection results D1 yielded by the motion sensor 140; alternatively, the control unit 150 reads at an interval of a processing time period detection results D1 yielded by the motion sensor 140.

In an embodiment of step S12, the control unit 150 compares the read detection results D1 with a predetermined motion condition sequentially and determines whether the detection results D1 meet the motion condition. In some embodiments, the motion condition is that detection result D1 is larger than a corresponding threshold, for example, G is larger than 0.2, and/or angular velocity about any one of X-axis, Y-axis, and Z-axis is larger than 5° per second. The control unit 150 determines, according to the result of the comparison between detection result D1 and the motion condition, whether the electronic device 100 is in an unsafe state for the time being, for example, whether the electronic device 100 is undergoing a speedy, vigorous motion, such as falling or being thrown.

When the control unit 150 determines that detection result D1 meets the motion condition, it means that the control unit 150 determines that the electronic device 100 is in an unsafe state for the time being. To prevent the electronic device 200 from shutting down instantly as soon as the primary battery module 200 escapes from the electronic device 100, the process flow of the method of the present invention goes to step S13a for turning on the power supply path of the secondary battery module 120 to keep the electronic device 100 operating. At this point, the control unit 150 generates start signal S1 to turn on the switch module 130, thereby turning on the power supply path of the secondary battery module 120.

Conversely, when the control unit 150 determines that detection result D1 does not meet a motion condition, it means that, at this point, the control unit 150 determines that the electronic device 100 is in a safe state, and therefore that it is not necessary to turn on the power supply path of the secondary battery module 120, thereby allowing the process flow of the method of the present invention to go to step S13b. At this point, the control unit 150 generates shutdown signal S2 to disconnect the switch module 130 and thus sever the power supply path which extends from the secondary battery module 120 to the power input end 110. Therefore, if the control unit 150 determines that detection result D1 does not meet a motion condition, the secondary battery module 120 will not supply power.

In an embodiment of step S13b, if the switch module 130 is initially disconnected, the control unit 150 will not need to generate and send shutdown signal S2 to the switch module 130. Conversely, if the switch module 130 is initially turned on (that is, step S13a is executed during a preceding round of a power control process, thereby turning on the power supply path of the secondary battery module 120,) the control unit 150 will need to generate and send shutdown signal S2 in order to disconnect the switch module 130 and thus sever the power supply path of the secondary battery module 120.

In an embodiment, the control unit 150 generates shutdown signal S2 only after a predetermined time period has elapsed. In another embodiment, the control unit 150 generates shutdown signal S2 upon determination that detection result D1 does not meet a motion condition. Both step S13a and step S13b are followed by step S11 to perform another round of the power control process.

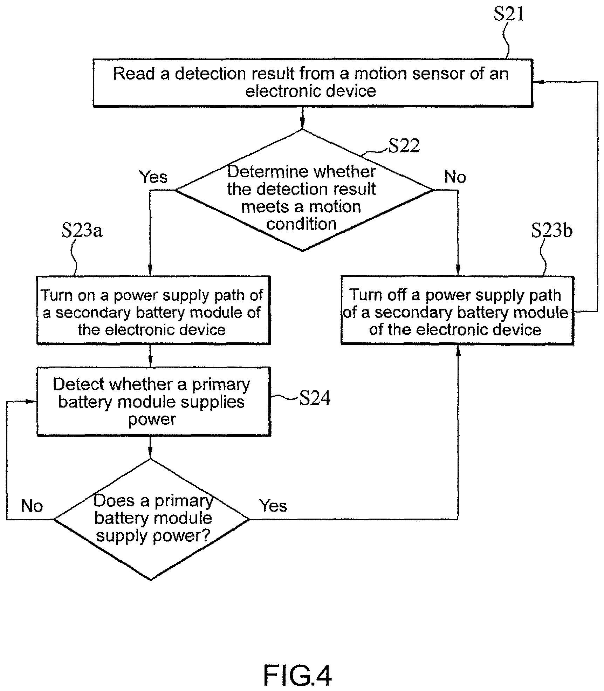

FIG. 4 is a flowchart of the uninterruptible power control method according to another embodiment of the present invention. Referring to FIG. 2 and FIG. 4, in an embodiment, the control unit 150 reads detection result D1 from the motion sensor 140 of the electronic device 100 (step S21). Then, the control unit 150 determines whether detection result D1 meets a motion condition (step S22). If the control unit 150 determines that detection result D1 does not meet the motion condition, the control unit 150 will turn off a power supply path of the secondary battery module 120 of the electronic device 100 (step S23b). Conversely, if the control unit 150 determines that detection result D1 meets the motion condition, the control unit 150 will turn on a power supply path of the secondary battery module 120 of the electronic device 100 (step S23a), and then the power supply detection unit 160 will begin to detect whether the primary battery module 200 supplies power (step S24). When the power supply detection unit 160 detects that the primary battery module 200 supplies power, not only does the power supply detection unit 160 generate shutdown signal S2, but step S23b also resumes, so as to turn off the power supply path of the secondary battery module 120. Conversely, if the power supply detection unit 160 detects that the primary battery module 200 does not supply power, step S24 will repeat until the power supply detection unit 160 detects that the primary battery module 200 supplies power and generates shutdown signal S2, and then the power supply detection unit 160 stops detecting.

Step S21, step S22, step S23a and step S23b are substantially identical to step S11, step S12, step S13a and step S13b, respectively, and thus are not described again for the sake of brevity.

In conclusion, according to embodiments of the present invention, an uninterruptible power control method and an electronic device with uninterruptible power supply are characterized in that: upon determination that a detection result from a motion sensor of an electronic device meets a motion condition, a power supply path of a secondary battery module is turned on; hence, even if the electronic device in an unsafe state (for example, falling or being thrown) fails to receive power supplied by a primary battery module, the electronic device will receive power through a power supply circuit of the secondary battery module so that the electronic device will keep functioning and thus avoid suffering a loss of data and getting damaged.

Although the present invention is disclosed above by preferred embodiments, the preferred embodiments are not restrictive of the present invention. Slight changes and modifications made to the preferred embodiments without departing from the scope of the present invention by persons skilled in the art should be covered by the present invention. Accordingly, the legal protection for the present invention should be defined by the appended claims.

## Claims

1. An uninterruptible power control method, comprising the steps of:
reading a detection result (D1) from a motion sensor (140) of an electronic device (100), wherein a primary battery module (200) supplies power to the electronic device (100) in a normal state;
determining whether the detection result (D1) meets a motion condition; and
turning on a power supply path of a secondary battery module (120) of the electronic device (100) when the detection result (D1) meets the motion condition, wherein the secondary battery module (120) is built in the electronic device (100),
**characterized in that** the secondary battery module (120) is coupled in parallel with the primary battery module (200) at the power input end (110) via a switch module (130), and the turning on step builds the power supply path of the secondary battery module (120) by turning on the switching module (130).

2. The uninterruptible power control method of claim 1, further comprising the step of supplying no power from the secondary battery module (120) when the detection result (D1) does not meet the motion condition.

3. The uninterruptible power control method of claim 1, further comprising, after the step of turning on a power supply path of a secondary battery module (120) of the electronic device (100), the steps of:
reading at least one other detection result (D1) after the detection result (D1);
determining whether the at least one other detection result (D1) meets the motion condition; and
turning off the power supply path of the secondary battery module (120) upon determination that the at least one other detection result (D1) does not meet the motion condition.

4. The uninterruptible power control method of claim 1, further comprising, after the step of turning on a power supply path of a secondary battery module (120) of the electronic device (100), the steps of:
detecting whether the primary battery module (200) supplies power; and
turning off the power supply path of the secondary battery module (120) upon detection that the primary battery module (200) supplies power.

5. The uninterruptible power control method of claim 1, wherein the motion sensor (140) comprises one of a G-sensor, a gyroscope sensing unit, and a combination thereof, and the detection result (D1) comprises one of a gravity information, a posture information, and a combination thereof, of the electronic device (100).

6. The uninterruptible power control method of claim 1, wherein the primary battery module (200) has a larger storage capacity than the secondary battery module (120).

7. The uninterruptible power control method of claim 1, wherein the motion condition is that G is larger than 0.2, or that angular velocity about any one of X-axis, Y-axis, and Z-axis is larger than 5° per second.

8. An electronic device (100) with uninterruptible power supply, comprising:
a power input end (110), wherein the electronic device (100) in a normal state is powered by a primary battery module (200) through the power input end (110);
a secondary battery module (120);
a switch module (130) coupled to between the power input end (110) and the secondary battery module (120);
a motion sensor (140) for sensing motion of the electronic device (100) and yielding a detection result (D1); and
a control unit (150) for determining whether the detection result (D1) meets a motion condition and, upon determination that the detection result (D1) meets the motion condition, generating a start signal (S1) to turn on the switch module (130), thereby turning on the power supply path of the secondary battery module (120),
**characterized in that** the switch module (130) is configured to couple the secondary battery module (120) in parallel with the primary battery module (200) at the power input end (110), to thereby build the power supply path of the secondary battery module (120).

9. The electronic device (100) with uninterruptible power supply according to claim 8, wherein the control unit (150) does not generate the start signal (S1) upon determination that the detection result (D1) does not meet the motion condition.

10. The electronic device (100) with uninterruptible power supply according to claim 8, wherein, after generating the start signal (S1), the control unit (150) determines whether at least one other detection result (D1) yielded by the motion sensor (140) meets the motion condition and then, upon determination that the at least one other detection result (D1) does not meet the motion condition, generates a shutdown signal (S2) to disconnect the switch module (130).

11. The electronic device (100) with uninterruptible power supply according to claim 8, further comprising a power supply detection unit (160) for detecting whether the power input end (110) receives power supply from the primary battery module (200) and, upon detection that the power input end (110) receives power supply from the primary battery module (200), generating a shutdown signal (S2) to disconnect the switch module (130).

12. The electronic device (100) with uninterruptible power supply according to claim 8, wherein the motion sensor (140) comprises one of a G-sensor, a gyroscope sensing unit, and a combination thereof, and the detection result (D1) comprises one of a gravity information, a posture information, and a combination thereof, of the electronic device (100).

13. The electronic device (100) with uninterruptible power supply according to claim 8, wherein the primary battery module (200) has larger storage capacity than the secondary battery module (120).

14. The electronic device (100) with uninterruptible power supply according to claim 8, wherein the motion condition is that G is larger than 0.2, or that angular velocity about any one of X-axis, Y-axis, and Z-axis is larger than 5° per second.

## Patentansprüche

1. Unterbrechungsfreies Stromsteuerverfahren, welches die folgenden Schritte aufweist:
Lesen eines Detektionsergebnisses (D1) von einem Bewegungssensor (140) einer elektronischen Vorrichtung (100), wobei ein primäres Batteriemodul (200) der elektronischen Vorrichtung (100) Strom zuführt in einem normalen Zustand,
Ermitteln, ob das Detektionsergebnis (D1) eine Bewegungsbedingung erfüllt, und
Einschalten eines Stromversorgungspfades eines sekundären Batteriemoduls (120) der elektronischen Vorrichtung (100), wenn das Detektionsergebnis (D1) die Bewegungsbedingung erfüllt, wobei das sekundäre Batteriemodul (120) in der elektronischen Vorrichtung (100) eingebaut ist,
**dadurch gekennzeichnet, dass** das sekundäre Batteriemodul (120) mit dem primären Batteriemodul (200) an dem Stromeingang-Ende (110) über ein Schaltmodul (130) parallelgeschaltet ist, und der Einschaltschritt den Stromversorgungspfad des sekundären Batteriemoduls (120) aufbaut durch Einschalten des Schaltmoduls (130).

2. Unterbrechungsfreies Stromsteuerverfahren gemäß Anspruch 1, welches ferner den Schritt aufweist, keinen Strom von dem sekundären Batteriemodul (120) zu liefern, wenn das Detektionsergebnis (D1) die Bewegungsbedingung nicht erfüllt.

3. Unterbrechungsfreies Stromsteuerverfahren gemäß Anspruch 1, welches ferner, nach dem Schritt des Einschaltens eines Stromversorgungspfades eines sekundären Batteriemoduls (120) der elektronischen Vorrichtung (100), die folgenden Schritte aufweist:
Lesen mindestens eines weiteren Detektionsergebnisses (D1) nach dem Detektionsergebnis (D1),
Ermitteln, ob das mindestens eine andere Detektionsergebnis (D1) die Bewegungsbedingung erfüllt, und
Abschalten des Stromversorgungspfades des sekundären Batteriemoduls (120) bei Ermittlung, dass das mindestens eine andere Detektionsergebnis (D1) die Bewegungsbedingung nicht erfüllt.

4. Unterbrechungsfreies Stromsteuerverfahren gemäß Anspruch 1, welches ferne, nach dem Schritt des Einschaltens eines Stromversorgungspfades eines sekundären Batteriemoduls (120) der elektronischen Vorrichtung (100), die folgenden Schritte aufweist:
Detektieren, ob das primäre Batteriemodul (200) Strom liefert, und
Abschalten des Stromversorgungspfades des sekundären Batteriemoduls (120) bei Detektion, dass das primäre Batteriemodul (200) Strom liefert,

5. Unterbrechungsfreies Stromsteuerverfahren gemäß Anspruch 1, wobei der Bewegungssensor (140) eines von einem G-Sensor, einer Gyroskop-Erfassungseinheit oder einer Kombination davon aufweist, und das Detektionsergebnis (D1) eine von einer Gravitationsinformation, einer Lageinformation oder einer Kombination davon aufweist, der elektronischen Vorrichtung (100).

6. Unterbrechungsfreies Stromsteuerverfahren gemäß Anspruch 1, wobei das primäre Batteriemodul (200) eine größere Speicherkapazität als das sekundäre Batteriemodul (120) hat.

7. Unterbrechungsfreies Stromsteuerverfahren gemäß Anspruch 1, wobei die Bewegungsbedingung ist, dass G größer als 0,2 ist oder dass eine Winkelgeschwindigkeit um irgendeine von einer X-Achse, einer Y-Achse und einer Z-Achse größer als 5° pro Sekunde ist.

8. Elektronische Vorrichtung (100) mit unterbrechungsfreier Stromversorgung, aufweisend:
ein Stromeingang-Ende (110), wobei die elektronische Vorrichtung (100) in einem normalen Zustand mittels eines primären Batteriemoduls (200) mit Strom versorgt wird über das Stromeingang-Ende (110),
ein sekundäres Batteriemodul (120),
ein Schaltmodul (130), welches zwischen das Stromeingang-Ende (110) und das sekundäre Batteriemodul (120) geschaltet ist,
einen Bewegungssensor (140) zum Erfassen von Bewegung der elektronischen Vorrichtung (100) und zum Erzielen eines Detektionsergebnisses (D1), und
eine Steuereinheit (150) zum Ermitteln, ob das Detektionsergebnis (D1) eine Bewegungsbedingung erfüllt, und bei Ermittlung, dass das Detektionsergebnis (D1) die Bewegungsbedingung erfüllt, zum Erzeugen eines Startsignals (S1), um das Schaltmodul (130) einzuschalten, wodurch der Stromversorgungspfad des sekundären Batteriemoduls (120) eingeschaltet wird,
**dadurch gekennzeichnet, dass**
das Schaltmodul (130) konfiguriert ist, um das sekundäre Batteriemodul (120) mit dem primären Batteriemodul (200) parallelzuschalten an dem Stromeingang-Ende (110), um dadurch den Stromversorgungspfad des sekundären Batteriemoduls (120) zu bilden.

9. Elektronische Vorrichtung (100) mit unterbrechungsfreier Stromversorgung gemäß Anspruch 8, wobei die Steuereinheit (150) das Startsignal (S1) nicht erzeugt bei Ermittlung, dass das Detektionsergebnis (D1) die Bewegungsbedingung nicht erfüllt.

10. Elektronische Vorrichtung (100) mit unterbrechungsfreier Stromversorgung gemäß Anspruch 8, wobei die Steuereinheit (150) nach Erzeugen des Startsignals (S1) ermittelt, ob mindestens ein anderes Detektionsergebnis (D1), welches mittels des Bewegungssensors (140) erzielt wird, die Bewegungsbedingung erfüllt, und dann, nach Ermittlung, dass das mindestens eine andere Detektionsergebnis (D1) die Bewegungsbedingung nicht erfüllt, ein Abschaltsignal (S2) erzeugt, um eine Verbindung des Schaltmoduls (130) zu trennen.

11. Elektronische Vorrichtung (100) mit unterbrechungsfreier Stromversorgung gemäß Anspruch 8, ferner aufweisend eine Stromversorgung-Detektion-Einheit (160) zum Detektieren, ob das Stromeingang-Ende (110) eine Stromversorgung von dem primären Batteriemodul (200) erhält, und bei Erfassung, dass das Stromeingang-Ende (110) eine Stromversorgung von dem primären Batteriemodul (200) erhält, zum Erzeugen eines Abschaltsignals (S2), um eine Verbindung des Schaltmoduls (130) zu trennen.

12. Elektronische Vorrichtung (100) mit unterbrechungsfreier Stromversorgung gemäß Anspruch 8, wobei der Bewegungssensor (140) eines von einem G-Sensor, einer Gyroskop-Erfassungseinheit oder eine Kombination davon aufweist, und wobei das Detektionsergebnis (D1) eine von einer Schwerkraftinformation, einer Lageinformation und einer Kombination davon aufweist, des elektronischen Geräts (100).

13. Elektronische Vorrichtung (100) mit unterbrechungsfreier Stromversorgung gemäß Anspruch 8, wobei das primäre Batteriemodul (200) eine größere Speicherkapazität als das sekundäre Batteriemodul (120) hat.

14. Elektronische Vorrichtung (100) mit unterbrechungsfreier Stromversorgung gemäß Anspruch 8, wobei die Bewegungsbedingung ist, dass G größer als 0,2 ist oder dass die Winkelgeschwindigkeit um irgendeine von einer X-Achse, einer Y-Achse und einer Z-Achse größer als 5° pro Sekunde ist.

## Revendications

1. Un procédé de commande d'alimentation électrique sans coupure, comprenant les étapes suivantes consistant à :
lire un résultat de détection (D1) provenant d'un capteur de mouvement (140) d'un dispositif électronique (100), dans lequel un module de batterie primaire (200) fournit de l'énergie au dispositif électronique (100) dans un état normal,
déterminer si le résultat de détection (D1) satisfait à une condition de mouvement, et
activer un chemin d'alimentation électrique d'un module de batterie secondaire (120) du dispositif électronique (100) lorsque le résultat de détection (D1) satisfait à la condition de mouvement, le module de batterie secondaire (120) étant installé dans le dispositif électronique (100),
**caractérisé en ce que** le module de batterie secondaire (120) est connecté en parallèle avec le module de batterie primaire (200) à l'extrémité d'entrée d'énergie (110) via un module de commutation (130), et l'étape d'activation établit le chemin d'alimentation électrique du module de batterie secondaire (120) en activant le module de commutation (130).

2. Le procédé de commande d'alimentation électrique sans coupure selon la revendication 1, comprenant en outre l'étape consistant à ne pas fournir de l'énergie à partir du module de batterie secondaire (120) lorsque le résultat de détection (D1) ne satisfait pas à la condition de mouvement.

3. Le procédé de commande d'alimentation électrique sans coupure selon la revendication 1, comprenant en outre, après l'étape d'activation d'un chemin d'alimentation électrique d'un module de batterie secondaire (120) du dispositif électronique (100), les étapes suivantes consistant à :
lire au moins un autre résultat de détection (D1) après le résultat de détection (D1),
déterminer si l'au moins un autre résultat de détection (D1) satisfait à la condition de mouvement, et
couper le chemin d'alimentation électrique du module de batterie secondaire (120) lorsqu'il est déterminé que l'au moins un autre résultat de détection (D1) ne satisfait pas à la condition de mouvement.

4. Le procédé de commande d'alimentation électrique sans coupure selon la revendication 1, comprenant en outre, après l'étape d'activation d'un chemin d'alimentation électrique d'un module de batterie secondaire (120) du dispositif électronique (100), les étapes suivantes consistant à :
détecter si le module de batterie primaire (200) fournit de l'énergie, et
couper le chemin d'alimentation électrique du module de batterie secondaire (120) lorsqu'il est détecté que le module de batterie primaire (200) fournit de l'énergie.

5. Le procédé de commande d'alimentation électrique sans coupure selon la revendication 1, dans lequel le capteur de mouvement (140) comprend un parmi un capteur G, une unité de détection gyroscopique et une combinaison de ceux-ci, et le résultat de détection (D1) comprend une parmi une information de gravité, une information de posture et une combinaison de celles-ci, du dispositif électronique (100).

6. Le procédé de commande d'alimentation électrique sans coupure selon la revendication 1, dans lequel le module de batterie primaire (200) présente une plus grande capacité de stockage que le module de batterie secondaire (120).

7. Le procédé de commande d'alimentation électrique sans coupure selon la revendication 1, dans lequel la condition de mouvement est que G est supérieure à 0,2 ou qu'une vitesse angulaire autour de l'un quelconque des axes X, Y et Z est supérieure à 5° par seconde.

8. Un dispositif électronique (100) à alimentation électrique sans coupure, comprenant :
une extrémité d'entrée d'énergie (110), où le dispositif électronique (100) est alimenté en énergie dans un état normal par un module de batterie primaire (200) via l'extrémité d'entrée d'énergie (110),
un module de batterie secondaire (120),
un module de commutation (130) connecté à entre l'extrémité d'entrée d'énergie (110) et le module de batterie secondaire (120),
un capteur de mouvement (140) pour détecter un mouvement du dispositif électronique (100) et pour obtenir un résultat de détection (D1), et
une unité de commande (150) pour déterminer si le résultat de détection (D1) satisfait à une condition de mouvement et, lorsqu'il est déterminé que le résultat de détection (D1) satisfait à la condition de mouvement, générer un signal de démarrage (S1) pour activer le module de commutation (130), activant ainsi le chemin d'alimentation électrique du module de batterie secondaire (120),
**caractérisé en ce que** le module de commutation (130) est configuré pour connecter le module de batterie secondaire (120) en parallèle avec le module de batterie primaire (200) à l'extrémité d'entrée d'énergie (110) pour former ainsi le chemin d'alimentation électrique du module de batterie secondaire (120).

9. Le dispositif électronique (100) à alimentation électrique sans coupure selon la revendication 8, dans lequel l'unité de commande (150) ne génère pas le signal de démarrage (S1) lorsqu'il est déterminé que le résultat de détection (D1) ne satisfait pas à la condition de mouvement.

10. Le dispositif électronique (100) à alimentation électrique sans coupure selon la revendication 8, dans lequel, après avoir généré le signal de démarrage (S1), l'unité de commande (150) détermine si au moins un autre résultat de détection (D1) obtenu par le capteur de mouvement (140) satisfait à la condition de mouvement, puis, après avoir déterminé que l'au moins un autre résultat de détection (D1) ne satisfait pas à la condition de mouvement, génère un signal d'arrêt (S2) pour déconnecter le module de commutation (130).

11. Le dispositif électronique (100) à alimentation électrique sans coupure selon la revendication 8, comprenant en outre une unité de détection d'alimentation électrique (160) pour détecter si l'extrémité d'entrée d'énergie (110) reçoit une alimentation électrique en provenance du module de batterie primaire (200), et lorsqu'il est détecté que l'extrémité d'entrée d'énergie (110) reçoit une alimentation électrique en provenance du module de batterie primaire (200), générer un signal d'arrêt (S2) afin de déconnecter le module de commutation (130).

12. Le dispositif électronique (100) à alimentation électrique sans coupure selon la revendication 8, dans lequel le capteur de mouvement (140) comprend un parmi un capteur G, une unité de détection gyroscopique et une combinaison de ceux-ci, et le résultat de détection (D1) comprend une parmi une information de gravité, une information de posture et une combinaison de celles-ci, du dispositif électronique (100).

13. Le dispositif électronique (100) à alimentation électrique sans coupure selon la revendication 8, dans lequel le module de batterie primaire (200) présente une plus grande capacité de stockage que le module de batterie secondaire (120).

14. Le dispositif électronique à alimentation électrique sans coupure (100) selon la revendication 8, dans lequel la condition de mouvement est que G est supérieure à 0,2 ou que la vitesse angulaire autour de l'un quelconque des axes X, Y et Z est supérieure à 5° par seconde.
